# EUROPÄISCHE PATENTSCHRIFT

(11) **EP 1 415 084 B1**
(45) Veröffentlichungstag und Bekanntmachung des Hinweises auf die Patenterteilung: **03.11.2010**
(21) Anmeldenummer: 02754508.6
(22) Anmeldetag: 08.08.2002
(51) Int. Cl.: F02M 61/00, F02M 61/16

(54) **DOSIERVORRICHTUNG**
DOSING DEVICE
DISPOSITIF DE DOSAGE

(30) Priorität: 08.08.2001 DE 10138914
(43) Veröffentlichungstag der Anmeldung: 06.05.2004
(73) Patentinhaber: SIEMENS AKTIENGESELLSCHAFT, 80333 München (DE)
(72) Erfinder: FISCHER, Bernhard, 84513 Töging am Inn (DE); GOTTLIEB, Bernhard, 81739 München (DE); KAPPEL, Andreas, 85649 Brunnthal (DE); ULIVIERI, Enrico, 81541 München (DE)
(86) Internationale Anmeldenummer: PCT/DE2002/002928
(87) Internationale Veröffentlichungsnummer: WO 2003/016707

(56) Entgegenhaltungen:
- EP-A- 0 324 905
- EP-A- 0 536 774
- DE-A- 19 921 489
- DE-A1- 19 928 204
- DE-C- 19 639 149
- US-A- 4 022 166
- US-A- 4 572 436
- US-A- 5 494 223
- PATENT ABSTRACTS OF JAPAN vol. 009, no. 215 (M-409), 3. September 1985 (1985-09-03) & JP 60 075759 A (HITACHI SEISAKUSHO KK;OTHERS: 01), 30. April 1985 (1985-04-30)

## Beschreibung

Die Erfindung betrifft eine Dosiervorrichtung und ein Verfahren zur Herstellung der Dosiervorrichtung.

Unter anderem bei einem Kraftstoffeinspritzventil als einer speziellen Art von Dosiervorrichtung muss der Kraftstoff der Einspritzdüse zugeführt werden. Der Zuführungsanschluss für den Kraftstoff befindet sich in der Regel an dem der Einspritzdüse gegenüberliegenden Ende des Kraftstoffeinspritzventils ("top feed"). Auch bekannt sind Konstruktionen, bei denen sich Kraftstoffanschluss im mittleren oder unteren Gehäusebereich des Kraftstoffeinspritzventils befindet ("bottom feed"). An die injektorinterne Kraftstoffleitung bestehen dabei folgende Anforderungen:
- absolute Dichtheit
- größtmögliches Volumen
- größtmögliche Nähe zur Einspritzdüse
- geringstmöglicher Strömungswiderstand
- geringer Außendurchmesser des Kraftstoffeinspritzventils
- einfache Herstellbarkeit/Montierbarkeit.

Beim Öffnen und Schließen der Einspritzdüse von Hochdruckinjektoren entstehen Druckschwingungen hoher Amplitude, die einen ungünstigen Einfluss auf die Dosiercharakteristik haben und die Haltbarkeit von Dichtungselementen nachteilig beeinflussen. Ein wirksames Mittel zur Verringerung der Druckschwingungsamplitude besteht in der Vergrößerung des der Einspritzdüse unmittelbar nachgeschalteten-injektorinternen Volumens der Kraftstoffzuführungsleitung, da für die Höhe der Druckschwingung die Speicherwirkung des Fluides, welches sich aus der Kompressibilität des Kraftstoffes und aus dem Speichervolumen ergibt, maßgeblich ist.

Andererseits ist bei modernen Mehrventilmotoren der Bauraum, insbesondere der Bohrungsdurchmesser im Zylinderkopf zur Aufnahme des Injektors, sehr eingeschränkt. Aus diesem Grund wird ein möglichst kleiner Injektoraußendurchmesser angestrebt, wodurch die injektorinterne Kraftstoffzuführung zur Einspritzdüse gemäß obiger Kriterien sehr erschwert ist.

DE 19928204 A1 offenbart eine Dosiervorrichtung nach der Gattung des Anspruchs 1.

JP 60075759 offenbart eine gekühlte Dosiervorrichtung mit zu- und Ablaufanschluss für Kraftstoff. Der Kraftstoff füllt einen Hohlraum, der den Injektorantrieb umgibt.

Es besteht die Aufgabe, eine Möglichkeit zur Reduzierung von Druckschwingungen bereitzustellen, welches einen vergleichsweise kleinen Injektoraußendurchmesser aufweist. Diese Aufgabe wird durch die Dosiervorrichtung nach Anspruch 1 und durch das Herstellungsverfahren nach Anspruch 4 gelöst.

Die Dosiervorrichtung weist mindestens einen Injektorantrieb und einen diesen radial umschließenden inneren Injektorkörper auf. Eine Einspritzdüse und ein Kraftstoffanschluss der Dosiervorrichtung sind in bekannter Weise ausgestaltbar. Eine Hülle umschließt den inneren Injektorkörper im Wesentlichen annähernd vollständig radial, so dass zwischen der Hülle und dem inneren Injektorkörper ein umlaufendes spaltförmiges Speichervolumen gebildet wird. Das Speichervolumen steht in ungedrosselter fluidischer Verbindung mit der Einspritzdüse und dem Kraftstoffanschluss.

Für diese Dosiervorrichtung ergibt sich der Vorteil, dass eine starke Vergrößerung des Kraftstoffspeichervolumens bei minimierter Bauform, insbesondere in Bezug auf den Injektordurchmesser, erreicht wird. Dadurch wird eine Absenkung der beim Öffnen bzw. Schließen entstehenden Druckwellen auf ein niedriges Niveau erreicht. Es ergibt sich eine verbesserte Linearität der Mengenkennlinie durch Vermeidung störender, die Durchflussrate modulierender Druckwellen und eine verbesserte ungedrosselte Kraftstoffzuführung bzw. ein niedriger Strömungswiderstand aufgrund des großen Leitungsquerschnitts. Ein weiterer Vorteil ist es, dass die Dauerstandfestigkeit der injektorinternen Kraftstoffzuführung durch Absenkung des Druckwellenniveaus erhöht wird. Auch ist eine einfache Montierbarkeit und volle Kompatibilität zu herkömmlichen piezoelektrischen Benzin-Direkteinspritzventilen möglich. Zusätzlich ist der Vorteil einer zusätzlichen Kühlung des Piezoaktors durch den Kraftstoff gegeben.

Es wird bevorzugt, wenn die Hülle und/oder die Außenseite des inneren Injektorkörpers einen im wesentlichen kreisförmigen Querschnitt aufweisen. Außer zylindrischen Querschnitten sind aber auch andere Querschnittsgeometrien möglich, z.B. elliptisch, quadratisch, polygon, etc.

Es ist zur Reduzierung von Druckwellen und zur Sicherstellung einer ausreichenden Kraftstoffzufuhr vorteilhaft, wenn das Speichervolumen mit der Einspritzdüse über mehrere erste Zuführungsbohrungen verbunden ist. Möglich ist aber auch eine einzige, dann ausreichend dimensionierte, erste Zuführungsbohrung.

Es ist zur Herstellung einer ausreichenden Kraftstoffzufuhr auch günstig, wenn das Speichervolumen mit dem Kraftstoffanschluss über mehrere zweite Zuführungsbohrungen verbunden ist; aber auch eine einzige Zuführungsbohrung ist möglich.

Das Speichervolumen kann zur Erhöhung der Stabilität auch mittels Längsrippen in mehrere Teilvolumina aufgeteilt sein, die vorteilhafterweise jeweils ungedrosselt mit der Kraftstoffzuführung und der Einspritzdüse verbunden sind. Auch ist das Speichervolumen aus mehreren, bevorzugt mindestens 5 Längsbohrungen formbar, wodurch eine sehr hohe Stabilität erreicht wird; in diesem Fall kann können die Hülle, der innere Injektorkörper und die Bohrungswandungen einstückig ausgeführt sein.

Die Dosiervorrichtung ist bevorzugt anwendbar als Benzin-Direkteinspritzer, insbesondere für Verbrauchs- und emissionsarme Benzin-Magermotoren nach SOP 2003 - Qualifikation. Sie ist aber selbstverständlich auch auf anderen Gebieten einsetzbar, z. B. als Diesel-Direkteinspritzer, in Flugzeugturbinen, als Sprüh-/Benetzungsvorrichtung etc.

Grundsätzlich sind alle Arten von Injektorantrieben einsetzbar, z. B. ein elektromagnetischer Injektorantrieb; die Dosiervorrichtung ist aber aufgrund der guten Schaltcharakteristik bevorzugt mit einem festkörperaktorischem Antrieb ausgestattet, z.B. mit einem elektrostriktiven, magnetostriktiven oder insbesondere piezoelektrischen Antrieb.

Die Herstellung der Dosiervorrichtung geschieht vorteilhafterweise so, dass die Hülle mindestens über den inneren Injektorkörper gezogen wird und dann mit der Ventilgruppe und dem Injektorboden verschweißt, insbesondere laserverschweißt, wird. Aber auch andere Arten der Befestigung sind möglich wie Klemmen, Kleben oder Verschrauben.

In den folgenden Ausführungsbeispielen wird die Dosiervorrichtung schematisch näher dargestellt.
- Figur 1: zeigt ein Benzin-Direkteinspritzventil nach dem Stand der Technik;
- Figur 2: zeigt ein weiteres Benzin-Direkteinspritzventil nach dem Stand der Technik;
- Figur 3: zeigt ein Benzin- Direkteinspritzventil vergrößertem Speichervolumen;
- Figur 4: zeigt eine Montagesequenz des Einspritzventils nach Figur 3.

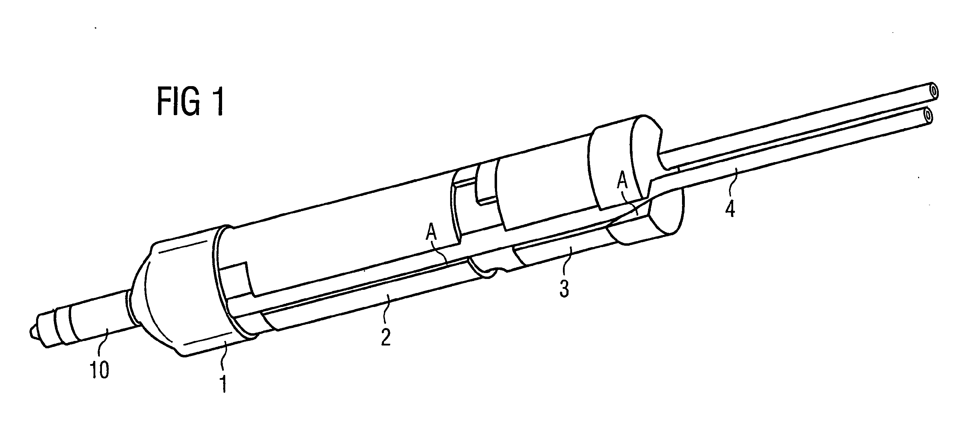

Figur 1 zeigt in Seitenansicht einen Benzin-Einspritzer nach dem Stand der Technik. Die äußerlich sichtbaren Injektorteile bestehen aus der Ventilgruppe 1 mit einer Einspritzdüse 10, dem Injektorkörper 2, welcher den Injektorantrieb 5 beinhaltet und dem Injektorboden 3. Ventilgruppe 1, Injektorkörper 2 und Injektorboden 3 sind fest miteinander verbunden, z. B. durch Verschraubung oder Verschweißung. Die Kraftstoffzuführung erfolgt über Kraftstoffröhrchen 4, welche jeweils in einer Ausfräsungen A versenkt sind. Das Kraftstoffröhrchen 4 endet in der Ventilgruppe 1 und ist dort mittels einer Dichtung, z. B. einem O-Ring oder einem Cu-Ring, abgedichtet. Um das Kraftstoffröhrchen 4 an einem Herauswandern aus der Ventilgruppe 1 zu hindern, ist es an dem Injektorkörper 2 und/oder dem Injektorboden 3 befestigt, z. B. durch Punktschweißung oder durch Verklemmung. Diese Lösung entspricht nicht allen anfangs beschriebenen Forderungen, da das Kraftstoffröhrchen 4 ein nur geringes Speichervolumen aufweist. Die dadurch hervorgerufenen hohen Druckschwingungen von z.B. +/- 100 bar bei einem Kraftstoffdruck von 200 bar führen zu massiven Problemen bei der Dauerhaltbarkeit der elastomeren O-Ring-Dichtung des Kraftstoffröhrchens 4 in der Ventilgruppe 1 und beeinträchtigen die Linearität der Einspritzmengenkennlinie.

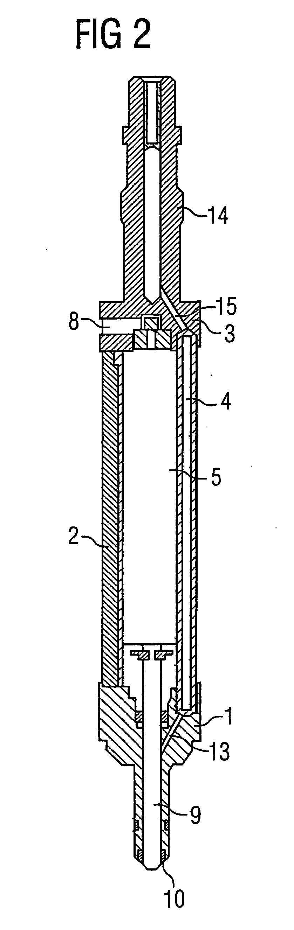

Figur 2 zeigt ein weiteres Benzin-Einspritzventil nach dem Stand der Technik, bei dem das Kraftstoffröhrchen 4 beidseitig einerseits in der Ventilgruppe 1 und andererseits in dem Injektorboden 3 mittels O-Ringen gedichtet ist. Diese Ausgestaltung bietet zwar montagetechnische Vorteile gegenüber dem Einspritzer aus Figur 1, weist aber ebenfalls die Nachteile eines zu geringen Speichervolumens und der dadurch hervorgerufenen Druckwellen hoher Amplitude auf, die zu den schon bei Figur 1 beschriebenen Nachteilen führen.

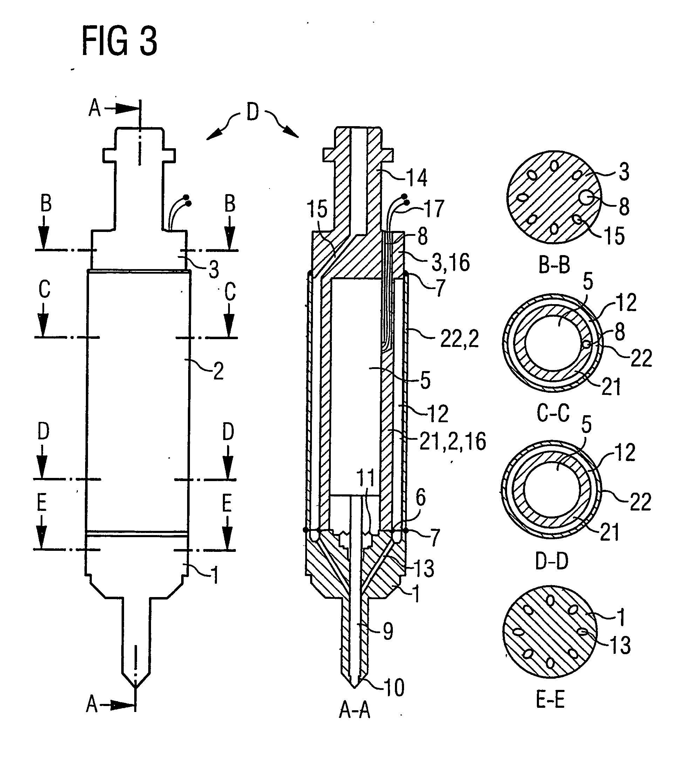

Figur 3 zeigt als Schnittdarstellung in Seitenansicht eine Dosiervorrichtung D, die eine reduzierte Weitergabe von Druckwellen ermöglicht.

Die Dosiervorrichtung D ist im wesentlichen zylindrisch, wobei der Injektorantrieb 5 in einen Injektoraufsatz 16 eingelassen ist, der den Injektorboden 3 und einen darauf aufsitzenden inneren Injektorkörper 21 umfasst. Injektorboden 3 und innerer Injektorkörper 21 sind erfindungsgemäß einstückig ausgeführt. Der Injektoraufsatz 16 ist stirnseitig mit der Ventilgruppe 1 durch eine umlaufende (Laser-)Schweißnaht 6 sowohl mechanisch als auch fluidisch hermetisch dicht verbunden. Der innere Injektorkörper 21 ist von einer Hülle in Form eines zylindrischen Rohrs 2 umschlossen. Das Rohr 2 ist mittels umlaufender (Laser-)Schweißnähte 7 einerseits mit dem Injektorboden 3 und andererseits mit der Ventilgruppe 1 hermetisch dicht verbunden, so dass ein großes Speichervolumen 12 gebildet wird, welches in ungedrosselter fluidischer Verbindung mit dem Kraftstoffanschluss 14 und der Einspritzdüse 10 steht. Außer zylindrischen Querschnitten sind jeweils auch andere Querschnittsgeometrien möglich, z.B. elliptisch, quadratisch, polygon, etc.

Zur Durchführung einer elektrischen Leitung 17 für den piezoelektrischen Injektorantrieb 5 sind in der Wandung des Injektoraufsatzes 16 eine oder mehrere Bohrungen 8 vorgesehen, die den Injektorantrieb 5 mit der äußeren Umgebung verbinden (siehe auch Schnitte B-B und C-C). Die Auslösung eines Einspritzvorganges erfolgt durch elektrische Ansteuerung des Injektorantriebs 5, welcher einen Hub auf eine Einspritznadel 9 ausübt und zu einem Öffnen der Einspritzdüse 10 führt. Durch ein flexibles Hochdruckdichtelement 11, bevorzugt einen Metallbalg, wird der Injektorantrieb 5 vor Kraftstoff geschützt.

Durch den in Figur 3 gezeigten Aufbau ergibt sich unmittelbar hinter der Ventilgruppe 1 ein maximales ringspaltförmiges, umschließendes Speichervolumen 12. Dieses wird gebildet durch den Außendurchmesser des inneren Injektorkörpers 21, den Innendurchmesser des Rohres 2 (siehe Schnitte C-C und D-D) und im wesentlichen der Länge des Rohres 2. Zur möglichst ungedrosselten Verbindung des Speichervolumens 12 mit der Einspritzdüse 10 befinden sich in der Ventilgruppe 1 mehrere erste Zuführungsbohrungen 13 (siehe Schnitt E-E). Ebenso weist das Injektorgehäuse 3 im Bereich des Kraftstoffanschlusses 14 mehrere zweite Zuführungsbohrungen 15 auf (siehe Schnitt B-B).

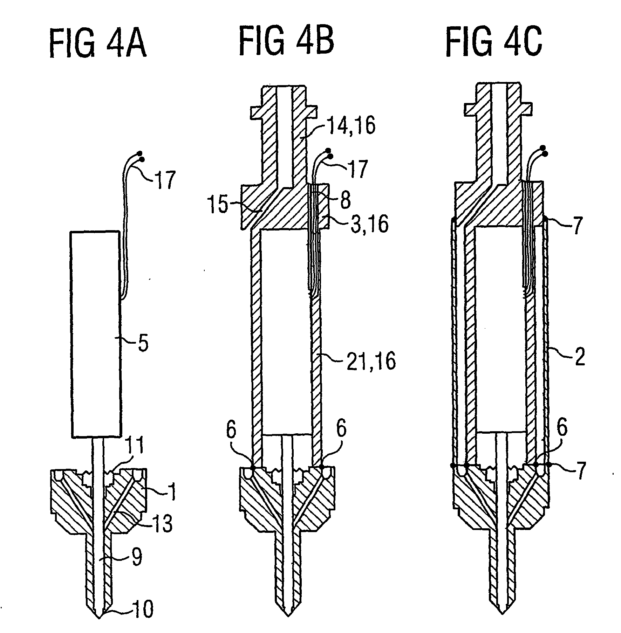

Figur 4 zeigt eine Montagesequenz für die Dosiervorrichtung D aus Figur 3. Ausgehend von Figur 4A mit Injektorantrieb 5 und Ventilgruppe 1 mit der Ventilnadel 9 wird in Figur 4B zunächst der Injektoraufsatz 16 über den Injektorantrieb 5 geschoben und stirnseitig auf Anlage mit der Ventilgruppe 1 gebracht. Dann wird der innere Injektorkörper 21 mit der Ventilgruppe 1 mittels einer (Laser-)Schweißnaht 6 verbunden. Nun wird, wie in Figur 4C dargestellt, das Rohr 2 von der Seite des Kraftstoffanschlusses 14 her soweit über den Injektoraufsatz 16 geschoben, bis es auf Anlage mit der Ventilgruppe 1 ist. In dieser Position wird das Rohr 2 sowohl mit der Ventilgruppe 1 als auch mit dem Injektorboden 3 hermetisch dicht durch eine (Laser-)Schweißnaht 7 verbunden.

Es ist unmaßgeblich, von welcher Seite das Rohr 2 über den inneren Injektorkörper 5 geschoben wird. In Figur 3 und Figur 4 weist das Rohr 2 hierzu einen geringfügig größeren Innendurchmesser auf, als der Injektorboden 3 im oberen Bereich (Schnitt B-B). Umgekehrt kann das Rohr 2 natürlich auch von der Seite der Ventilgruppe 1 her übergeschoben werden, wenn diese einen an das Rohr 2 angepassten Außendurchmesser aufweist. Darüber hinaus können die Ventilgruppe 1 und der Injektorboden 3 auch beide einen etwas geringeren Außendurchmesser haben es als dem Innendurchmesser des Rohres 2 entspricht, so dass es keine Rolle spielt, von welcher Seite her das Rohr 2 übergeschoben wird.

Durch den Ersatz von elastomeren Dichtelementen durch Laserschweißnähte 6,7 wird die Lebensdauer vorteilhafterweise erhöht.

## Patentansprüche

1. Dosiervorrichtung, aufweisend:
- einen inneren Injektorkörper (21), der mindestens einen Injektorantrieb (5) radial umschließt
- einen einzigen Kraftstoffanschluss (14),
- einen inneren Injektorkörper (21), der im Wesentlichen von einer Hülle (2) radial annähernd vollständig umschlossen ist,
- ein umlaufendes, spaltförmiges Speichervolumen (12), zwischen Hülle (2) und innerem Injektorkörper (21), und
- ein Fluid in dem Speichervolumen (12) in ungedrosselter fluidischer Verbindung mit einerseits einer Ventilgruppe (1) und andererseits dem Kraftstoffanschluss (14), **dadurch gekennzeichnet, daß** der innere Injektorkörper einstückig mit einem Injektorboden (3) sowie mechanisch und fluidisch hermetisch dicht mit der Ventilgruppe (1) verbunden ist.

2. Dosiervorrichtung nach Anspruch 1, bei der das Speichervolumen (12) mit der Einspritzdüse (10) über mehrere erste Zuführungsbohrungen (13) verbunden ist.

3. Dosiervorrichtung nach Anspruch 1 oder 2, bei der das Speichervolumen (12) mit dem Kraftstoffanschluss (14) über mehrere zweite Zuführungsbohrungen (15) verbunden ist.

4. Verfahren zur Herstellung der Dosiervorrichtung, nach einem der Ansprüche 1, 2 oder 3, bei dem
die Hülle (2) über den inneren Injektorkörper (21) gezogen wird und dann mit einer Ventilgruppe (1) und einem Injektorboden (3) verschweißt, insbesondere laserverschweißt, wird.

## Claims

1. Dosing device, comprising
- an inner injector body (21) radially enclosing at least one injector drive (5),
- a single fuel connection (14),
- an inner injector body (21), which is essentially enclosed radially almost completely by a sleeve (2),
- a circumferemtial storage volume (12), in the form of a gap between envelope (2) and inner injector body (21), and
- a fluid in the storage volume (12) in unrestricted fluidic connection with a valve group (1) on one side and with the fuel connection on the other side, **characterised in that** the inner injector body is connected in one piece to an injector base (3) and also mechanically and fluidically hermetically-sealed to the valve group (1).

2. Dosing device according to claim 1, in which the storage volume (12) is connected to the injection nozzle (10) via a number of first feed holes (13).

3. Dosing device according to claim 1 or 2, in which the storage volume (12) is connected to the fuel connection (14) via a number of second feed holes (15).

4. Method for producing the dosing device according to one of claims 1, 2 or 3, in which
the sleeve (2) is drawn over the inner injector body and is then welded to a valve group (1) and an injector base (3), especially laser welded.

## Revendications

1. Dispositif de dosage comprenant :
- un corps d'injecteur intérieur (21), qui enveloppe radialement au moins un entraînement d'injecteur (5),
- un seul raccord de carburant (14),
- un corps d'injecteur intérieur (21), qui essentiellement est presque entièrement radialement enveloppé par une gaine (2),
- un volume de stockage (12) périphérique, en forme de fente, entre gaine (2) et corps d'injecteur intérieur (21), et
- un fluide contenu dans le volume de stockage (12), en liaison fluidique non étranglée avec un groupe de soupapes (1) d'une part et le raccord de carburant (14) d'autre part,
**caractérisé en ce que** le corps d'injecteur intérieur (21) est relié d'une seule pièce à un fond d'injecteur (3) ainsi que mécaniquement et fluidiquement, de manière hermétiquement étanche, au groupe de soupapes (1).

2. Dispositif de dosage selon la revendication 1, dans lequel le volume de stockage (12) est relié à la buse d'injection (10) par le biais de plusieurs premiers alésages d'alimentation (13).

3. Dispositif de dosage selon la revendication 1 ou 2, dans lequel le volume de stockage (12) est relié au raccord de carburant (14) par le biais de plusieurs seconds alésages d'alimentation (13).

4. Procédé de fabrication du dispositif de dosage selon l'une des revendications 1, 2 ou 3, dans lequel la gaine (2) est enfilée sur le corps d'injecteur interne (21) puis soudée avec le groupe de soupapes (1) et un fond d'injecteur (3), en particulier au laser.
